# EUROPEAN PATENT APPLICATION

(11) **EP 2 101 394 A1**
(43) Date of publication of application: **16.09.2009**
(21) Application number: 08152502.4
(22) Date of filing: 10.03.2008
(51) Int. Cl.: H02J 13/00

(54) **Distribution controller**

(71) Applicant: ABB Research Ltd., 8050 Zürich (CH)
(72) Inventor: Yuen, Cherry, CH-5400, Baden (CH); Hakala-Ranta, Antti, FL 65230, Vaasa (FI); Larsson, Mats, CH-5400, Baden (CH)
(74) Representative: ABB Patent Attorneys

(57) **Abstract**

The present invention is concerned with a distribution controller (19) for controlling a distribution of electrical power in an assigned power distribution region (1). The controller is adapted to be communicatively connected to process or secondary devices (IEDs,RTUs) (21a,21b,21c) which in turn interact with primary devices of the assigned region. The controller comprises a processing module (29) executing algorithmic, logical or functional modules or client applications. The latter implement application function algorithms that calculate, based on process data from process devices connected to the controller, values of a power distribution quantity such as voltage, current, power flow, load, or a phasor quantity of the assigned region. The controller further comprises, for the purpose of data exchange with the process devices communicatively connected to the controller, data servers (27a,27b,27c). The controller is adapted for writing the output or results of the functional module, i.e. a value of the aforementioned power distribution quantity, to one of said data servers, and thus takes advantage of the existing controller structure.

## Description

### FIELD OF THE INVENTION

The invention relates to the field of electrical power distribution. It departs from a distribution controller for controlling distribution of electrical power as described in the preamble of claim 1.

### BACKGROUND OF THE INVENTION

A power distribution system is the interface between the power transmission network and the electricity end-customers. Typically the power distribution system comprises a number of primary substations which are connected to secondary substations via power lines and switches. The primary substations contain transformers that reduce the voltage from the HV level of the transmission or sub-transmission grid down to MV levels suitable for regional transmission. Distribution level network control involves pieces of secondary equipment interacting with the primary equipment of the substations and power lines, i.e. switches, tap changers, capacitor banks and the like. Distribution areas, regions or cells are assigned to one single primary substation and defined by electrically unambiguously connected primary equipment (tree or feeder structure). However, a distribution area is subject to changes during reconfiguration of network topology, potentially leading to a discrepancy between the distribution area and a virtual domain of associated secondary equipment. In addition, distributed generation of electric power on lower voltage levels of the distribution system generates some considerable coordination tasks for distribution level network control.

By way of example, the paper by Per Lund entitled "The Danish Cell Project - Part 1: Background and General Approach", IEEE 2007, Power Engineering Society General Meeting, June 2007, describes a Cell Controller Pilot Project which aims at developing a new solution for optimal management and active grid utilisation of the large amount of distributed generation present in Western Denmark. For this purpose, the 60 kilo Volt (kV) network parts below each 150/60 kV transformer at the primary substations are operated as radial networks by opening a sufficient number of 60 kV line breakers in selected substations and thus sectioning the otherwise meshed networks of the 60 kV distribution systems. Each of these radially operated 60 kV networks then defines a 60 kV distribution cell, to be controlled by a cell controller with a number of functions and a link to the Supervisory Control And Data Acquisition (SCADA) system at the Network Control Centre (NCC) of the Distribution Network Operator (DNO).

Cell or distribution controllers, also termed Intelligent Substation Control Systems (ISCS), may comprise one or several physical devices and are generally located in a primary substation of a distribution area. An ISCS is capable of functioning as a substation gateway to the NCC by providing gateway functions for mapping signals between secondary equipment for protection and control and higher-level systems. In particular, it is able to translate internally the process data from various master protocols into a standard protocol, e.g. the IEC 61850 standard data model, and to translate the data from the standard data model into one of the common slave protocols.

By way of example, an ISCS is connected through the existing communication infrastructure to an NCC, the two communicating via a tele-control protocol of the master-slave type, for instance IEC 60870-5-101. A number of protocols, such as SPA, LON-LAG and IEC 60870-5-103, are used to connect the ISCS to the secondary or process devices for protection, control and monitoring purposes, which process devices are located in the vicinity of the primary devices and execute local decision logic. On the other hand, the IEC 61850 standard protocols are client-server based, which allows several clients to access data from a same server or process device. They define the semantics of the data within the substation in a standardized object-oriented way, and offer a standardized method to transfer data between different engineering tools in a standardized format.

Typically, the ISCS comprises OPC (Object-Linking and Embedding (OLE) for Process Control, also referred to as "OPen Connectivity") Data Access client and server components. OPC Data Access is a group of standards that provides specifications for continuously communicating real-time data from data acquisition devices to process or interface devices and for synchronizing process measurements with mirror entries at an OPC server. OPC also allows a client application to access several data items with one single request. OPC clients are used for slave/server protocol stacks to enable external systems to access data available on OPC Servers. OPC servers in the ISCS are used mainly for master/client protocol stacks in order to provide access to the data in the data acquisition or process devices connected via a particular protocol. In general, different types of OPC server instances, depending on the process devices connected and/or the protocols (LON, SPA, or IEC 61850) used to communicate with the process devices are instantiated in the ISCS.

### DESCRIPTION OF THE INVENTION

It is an objective of the invention to provide a distribution controller with enhanced functionality and simple architecture. This objective is achieved by a distribution controller and a method of providing a power distribution quantity according to the claims 1 and 3. Further preferred embodiments are evident from the dependent patent claims.

According to the invention, a distribution controller for controlling a distribution of electrical power in an assigned power distribution region or cell is adapted to be communicatively connected to process or secondary devices which in turn interact with primary devices of the assigned region. The process devices, such as substation Intelligent Electronic Devices IEDs and Remote Terminal Units RTUs, provide process data such as alarms, control, events, measurements, disturbance recorder uploads, or parameter settings. The controller comprises a processing module executing application function algorithms and/or Logical Nodes according to IEC 61850. The application function algorithms calculate, based on process data from process devices connected to the controller, values of a power distribution quantity such as voltage, current, power flow, load, or a phasor quantity of the assigned region. The controller further comprises, for the purpose of data exchange with process devices communicatively connected to the controller, process data servers that are adapted to host representations of the process devices. The controller writes or associates the output or results of the functional module, i.e. a value of the aforementioned power distribution quantity, to one of said process data servers. Using a process data server adapted to provide access to process data from a process device connected to the controller takes advantage of the existing controller structure and eliminates the need for implementing a dedicated server for the purpose of disseminating the derived power distribution quantities.

In a preferred variant of the invention a representation or Common Data Model (CDM) object of a Logical Node (LN) of a virtual Intelligent Electronic Device (IED) is instantiated or configured in said process data server. The virtual IED is not communicatively connected to the distribution controller, as it is either assigned to a different control domain or distribution region, or does not exist at all. The abovementioned output of the functional module is then associated to an attribute of the Logical Node and written to the representing CDM object. Data access to the derived power distribution quantity at a later stage may thus occur in a standard way.

The present invention also relates to a computer program including computer program code means for controlling one or more processors of a distribution controller connected to process devices of an electrical power distribution region, which computer program is storable on a computer readable medium such as a memory integrated in the controller or a data carrier that can be inserted into the controller, and which computer program, when executed, makes the distribution controller operate in accordance with the invention.

### BRIEF DESCRIPTION OF THE DRAWINGS

The subject matter of the invention will be explained in more detail in the following text with reference to preferred exemplary embodiments which are illustrated in the attached drawings, in which:
Fig.1 depicts a distribution area of a power distribution system,
Fig.2 shows some components of a distribution controller for the distribution area, and
Fig.3 is a screenshot from an engineering tool used for configuring a data server of the distribution controller.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

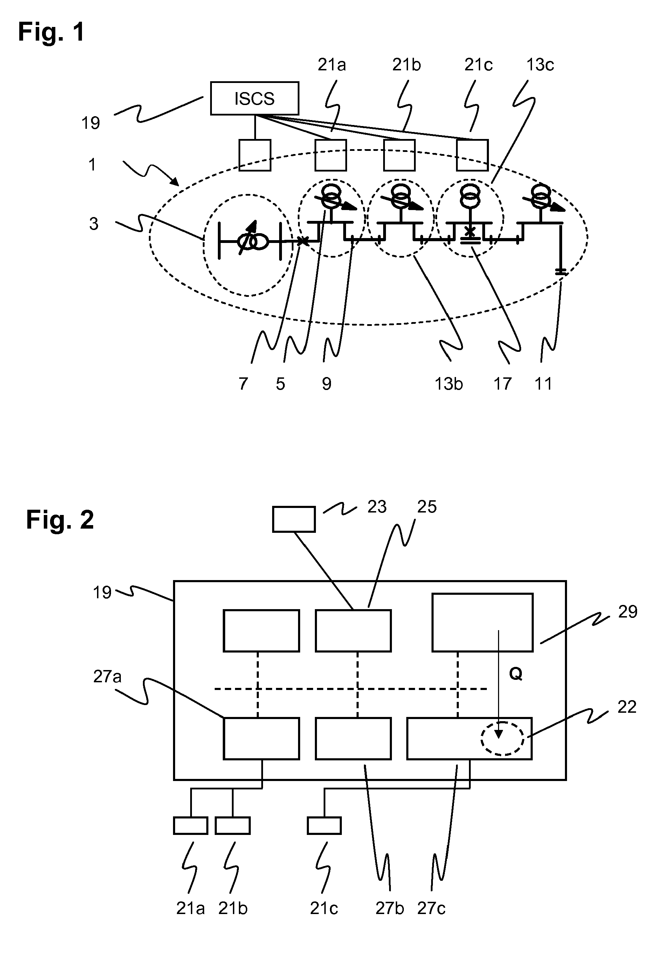

Fig.1 illustrates an exemplary power distribution system comprising a distribution region, area or cell 1 that is defined by electrically unambiguously connected primary equipment (tree or feeder structure) and includes a single primary substation 3. The primary substation 3 contains a transformer that reduces the voltage from the HV level of the transmission or sub-transmission grid (not shown) down to MV levels suitable for regional transmission, and is connected to secondary substations 13a, 13b, 13c via power lines and switches. In selected secondary substations tap changing transformers 5 in turn connect customers or LV feeders (not shown) to the MV level. The power distribution system comprises a plurality of primary devices, such as the controlled transformers 5, circuit breaker 7, switches 9 (open) and 11 (closed), power sources for distributed generation and controlled capacitors 17.

Distribution level network control involves secondary equipment or process devices 21a, 21b, 21c interacting with the aforementioned substations 3, 13 and/or any other primary device of the distribution region 1. By definition, the distribution region 1 is assigned a single distribution controller 19 or Intelligent Substation Control System (ISCS) to which the process devices 21 are communicatively connected, and which is adapted to perform various control, optimization and management functions on behalf of the distribution region 1.

Fig.2 schematically depicts some elements of an exemplary distribution controller or Intelligent Substation Control System (ISCS) 19, i.e. an industrial PC with appropriate processing means and comprising a number of functional modules and servers that are capable of communicating with each other as conceptually indicated by the dashed lines. The distribution controller 19 is communicatively connected to a number of process devices 21a, 21b, 21c, as well as to a Network Control Centre (NCC) 23, wherein an OPC client 25 acts as an interface enabling data access within the controller by the NCC or any other external system. In particular, the controller comprises a number of data servers 27a, 27b, 27c of the OPC type. Data received according to the various communication protocols used by the process devices 21 for data transfer, is translated into a standard protocol or abstract model of the network and associated devices called Common Data Model (CDM). Accordingly, each process device or physical IED 21c and/or its individual Logical Nodes (LN) in terms of IEC 61850 such as exemplary Logical Node XCBR related to a circuit breaker, are represented by abstract CDM objects that are hosted by the respective server 27c. These CDM objects are intrinsically linked to the represented process devices and contain a mirror copy of the necessary data such as the attribute values of various Logical Nodes that the represented process devices provide. According to a synchronizing "read/write" or "refresh" aspect of the CDM representation, whenever any control operation is ordered or a decision is made, the corresponding CDM object 21c is updated and the associated process device 21c is automatically notified and ordered to have the operation executed. Likewise, whenever new data is available at the process devices, e.g. as a changed attribute value of Logical Node XCBR, the new data is automatically sent to or streamed by the server 27c in order to update the relevant CDM object.

The controller further comprises a processing module 29 running application function algorithms and/or Logical Nodes according to IEC 61850 by executing appropriate algorithmic, logical or functional processing steps. The applications calculate or derive, based on process data originating from one or several of the process devices 21a, 21b, 21c and provided by the respective servers 27a, 27b, 27c values of a power distribution quantity Q. The derived power distribution quantity may be a voltage, current, power flow, load, or phasor quantity at a particular location of the assigned distribution region 1. By way of example, a voltage value which is not provided by online measurements may be derived by using a state estimator. Similarly, the client application processing module 29 may derive protection and/or control actions to be executed by the primary devices 21 of the assigned region, such as opening of a particular switch. The respective command value is then written to the CDM object of the real process device that is assigned to the primary device 21.

The output of the functional client application 29, i.e. the updated value of the quantity Q, is written to one or several of the existing data servers 27c as depicted by the arrow in Fig.2. The data server 27c is adapted to communicate with a real process device, i.e. it may or may not be actually used for that purpose. Said output can then be broadcast or disseminated within the controller, e.g. to other existing clients such as OPC client 25, at a later stage. The data written to the server 27c can be stored in a data object such as CDM object 22 instantiated in the data server 27c and representing an attribute of a Logical Node of a real or virtual Intelligent Electronic Device (IED). The proposed data flow mechanism can be applied to different functional blocks that co-exist in the same substation intelligence master device.

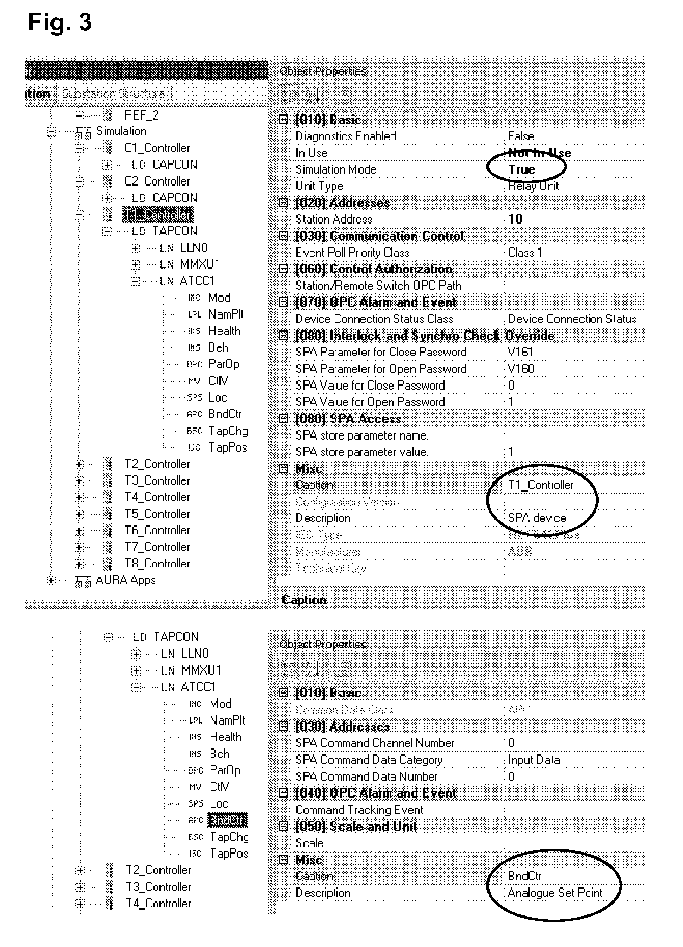

Fig.3 is an excerpt of a screenshot from a suitable engineering tool employed to configure, in an exemplary embodiment of the invention, a SPA OPC server 27c for the purpose of storing and subsequently disseminating the outputs, in IEC 61850 data format, of an application function algorithm. For instance, the application function algorithm can work out a voltage value somewhere in the network which is not provided by online measurements, such as the primary voltage at the location of a particular transformer 5. With regard to said output, a user of the engineering tool selects appropriate IED type, Logical Node (LN) and attribute to which the output is then associated. In the example depicted, a transformer control IED with the caption T1_controller and comprising an LN of class ATCC (Automatic Tap Change Controller) with the caption ATCC1 have been selected. The calculated value of the voltage is then written to the data attribute BndCtr (Band Center Voltage). The latter is part of APC (Controllable Analogue set Point Information), a data class or template according to IEC 61850 that has predefined data attributes for storing associated information and/or data.

Following the above, a Simulation Mode of the target IED is set to True, which means that the targeted transformer control IED is a virtual IED that is not communicatively connected to the data server 27c and may even be physically inexistent altogether. Finally, the engineering tool is connected to the controller, the changes prepared by the user are uploaded and the configuration of the controller is updated. In the above case, this results at least in CDM object 22 representing the BndCtr data attribute of a virtual transformer control IED being instantiated on the SPA OPC data server 27c.

### LIST OF DESIGNATIONS

- 1: power distribution region
- 3: primary substation
- 5: controlled transformer
- 7: circuit breaker
- 9: switch (open)
- 11: switch (closed)
- 13: secondary substation
- 17: controlled capacitor
- 19: distribution controller or ISCS
- 21: process device
- 22: virtual IED
- 23: Network Control Centre
- 25: OPC client
- 27: data server
- 29: processing module

## Claims

1. A distribution controller (19) for controlling a distribution of electrical power in a power distribution region (1) assigned to the controller, wherein the controller comprises data servers (27a, 27b, 27c) adapted to communicate with process devices (21a, 21b, 21c) of the assigned distribution region (1), and wherein the controller comprises a processing module (29) for deriving, based on process data from process devices (21), values of a power distribution quantity (Q) of the distribution region (1), **characterized in that** the controller is adapted for writing derived values of the power distribution quantity (Q) to one of the data servers (27c) adapted to communicate with a process device (2 1 c).

2. The distribution controller according to claim 1, **characterized in that** the power distribution quantity (Q) is associated to an attribute (BndCtr) of a Logical Node (LN) of a virtual Intelligent Electronic Device (IED).

3. A method of providing a power distribution quantity Q by a distribution controller (19) controlling a distribution of electrical power in a power distribution region (1) assigned to the controller (19, comprising
- transferring process data from a process device (21) to a data server (27) of the controller (19),
- calculating, by a processing module (29) of the controller (19) and based on said process data, a value of a power distribution quantity (Q) of the distribution region (1),
- writing said value to a data server (27c) adapted to communicate with a process device (21c) of the assigned distribution region (1), and
- accessing said data server (27c) and retrieving said value by other functional modules or clients (25) of the controller (19).

4. The method according to claim 3, **characterized in that** it comprises associating the power distribution quantity (Q) to an attribute (BndCtr) of a Logical Node (LN) of a virtual Intelligent Electronic Device (IED).

5. The method according to claim 4, **characterized in that** it comprises configuring the data server (27c) of the distribution controller (19) by instantiating, in the data server (27c), a Common Data Model (CDM) object (22) representing said attribute (BndCtr).
